# FASCICULE DE BREVET EUROPEEN

(11) **EP 1 682 761 B1**
(45) Date de publication et mention de la délivrance du brevet: **16.07.2008**
(21) Numéro de dépôt: 04818443.6
(22) Date de dépôt: 12.10.2004
(51) Int. Cl.: F02D 41/02, F02D 41/40, F02D 41/14

(54) **SYSTEME D'AIDE A LA REGENERATION DE MOYENS DE DEPOLLUTION D'UN MOTEUR DE VEHICULE**
SYSTEM ZUR UNTERSTÜTZUNG DER REGENERATION VON KRAFTFAHRZEUG-ABGASENTGIFTUNGSMITTELN
SYSTEM FOR ASSISTING IN THE REGENERATION OF MOTOR VEHICLE DEPOLLUTION MEANS

(30) Priorité: 07.11.2003 FR 0313162
(43) Date de publication de la demande: 26.07.2006
(73) Titulaire: Peugeot Citroën Automobiles S.A., 78140 Vélizy Villacoublay (FR)
(72) Inventeur: COLIGNON, Christophe, F-92300 LEVALLOIS PERRET (FR)
(74) Mandataire: Habasque, Etienne J. Jean-François
(86) Numéro de dépôt international: PCT/FR2004/002589
(87) Numéro de publication internationale: WO 2005/047677

(56) Documents cités:
- EP-A- 1 281 852
- DE-A- 10 033 159
- DE-A- 19 932 290
- FR-A- 2 804 168

## Description

La présente invention concerne un système d'aide à la régénération de moyens de dépollution associés à des moyens formant catalyseur d'oxydation, et intégrés dans une ligne d'échappement d'un moteur Diesel de véhicule automobile.

Pour des exemples de tels systèmes, on pourra par exemple se rapporter aux documents DE 100 33 159 et FR 2 804 168.

Plus particulièrement, l'invention se rapporte à un tel système dans lequel le moteur est associé à des moyens d'alimentation à rampe commune d'injection de carburant dans des cylindres du moteur, selon au moins une post-injection, et adaptés pour mettre en oeuvre, à iso-couple, au moins deux stratégies de régénération de premier et de second niveaux, selon des paramètres de contrôle de fonctionnement du moteur différents, afin d'obtenir des niveaux thermiques différents dans la ligne d'échappement, le niveau thermique correspondant à la stratégie de second niveau étant supérieur à celui correspond à la stratégie de premier niveau.

Lors de la régénération de moyens de dépollution, tel qu'un filtre à particules, un catalyseur d'oxydation après un empoisonnement par le soufre, un piège à NOx pour une désulfatation ou un piège à SOx, il est nécessaire d'élever fortement la température des gaz d'échappement du moteur afin d'obtenir une régénération rapide et ainsi minimiser la surconsommation de carburant associée à cette régénération.

Or, ceci nécessite d'augmenter très fortement la température en entrée des moyens formant catalyseur.

Certaines stratégies reposent également sur l'utilisation de la conversion des hydrocarbures imbrûlés provenant de la combustion dans le moteur, par des moyens formant catalyseur, pour élever encore le niveau thermique dans la ligne d'échappement.

Cependant, des niveaux d'exotherme catalytique trop élevés peuvent conduire à la rupture des moyens formant catalyseur dans le pire des cas ou à un vieillissement prématuré de ceux-ci et donc à une dégradation des performances de conversion de ceux-ci.

Il est donc nécessaire de bien maîtriser l'exotherme catalytique produit lors de la régénération.

Le but de l'invention est donc de résoudre ces problèmes.

A cet effet, l'invention a pour objet un système d'aide à la régénération de moyens de dépollution associés à des moyens formant catalyseurd'oxydation, et intégrés dans une ligne d'échappement d'un moteur Diesel de véhicule automobile, dans lequel le moteur est associé à des moyens d'alimentation à rampe commune d'injection de carburant dans des cylindres du moteur, selon au moins une post-injection, et adaptés pour mettre en oeuvre, à iso-couple, au moins deux stratégies de régénération de premier et de second niveaux, selon des paramètres de contrôle de fonctionnement du moteur différents, afin d'obtenir des niveaux thermiques différents dans la ligne d'échappement, le niveau thermique correspondant à la stratégie de second niveau étant supérieur à celui correspondant à la stratégie de premier niveau, caractérisé en ce qu'il comporte des moyens d'acquisition du niveau d'exotherme des moyens formant catalyseur, des moyens de comparaison de ce niveau d'exotherme à une valeur de seuil de sécurité des moyens formant catalyseur, pour, en cas de dépassement de cette valeur de seuil, lors de l'application de la stratégie de second niveau, piloter les moyens d'alimentation de réguler progressivement au moins l'un des paramètres de contrôle du fonctionnement du moteur, de manière à réduire le niveau d'exotherme des moyens formant catalyseur et si ce niveau n'est pas redescendu en-dessous de la valeur de seuil au bout d'une première période de temps prédéterminée, piloter les moyens d'alimentation pour basculer vers la stratégie de premier niveau et si ce niveau d'exotherme des moyens formant catalyseur n'est toujours pas redescendu en-dessous de la valeur de seuil de sécurité au bout d'une seconde période de temps, arrêter la stratégie de régénération,
en ce que les moyens d'alimentation sont adaptés pour mettre en oeuvre deux post-injections successives,
en ce que lors de ladite régulation progressive d'au moins l'un des paramètres de contrôle du fonctionnement du moteur, les moyens d'alimentation réduisent progressivement le débit en carburant de la seconde post-injection en utilisant un facteur correctif compris entre 0 et 1 et déterminé à partir de l'écart entre le niveau d'exotherme et la valeur de seuil de sécurité.

Suivant d'autres caractéristiques :
- le facteur correctif est déterminé par un régulateur de type PI à gain non linéaire ;
- les moyens d'acquisition du niveau d'exotherme comprennent deux capteurs de température, l'un placé en amont et l'autre en aval des moyens formant catalyseur ;
- le moteur est un moteur Diesel associé à un turbocompresseur ;
- la valeur de seuil de sécurité est calibrable ;
- les moyens de dépollution comprennent un filtre à particules ;
- les moyens de dépollution comprennent un piège à NOx ;
- les moyens de dépollution comprennent un piège à SOx ;
- les moyens de dépollution comprennent un catalyseur d'oxydation ;
- le carburant comporte un additif destiné à se déposer avec les particules auxquelles il est mélangé, sur les moyens de dépollution pour faciliter leur régénération ; et
- le carburant comporte un additif formant piège à NOx.

L'invention sera mieux comprise à la lecture de la description qui va suivre, donnée uniquement à titre d'exemple et faite en se référant aux dessins annexés, sur lesquels :
- la Fig.1 représente un schéma synoptique illustrant la structure d'un système d'aide à la régénération selon l'invention ; et
- la Fig.2 illustre le fonctionnement de moyens de pilotage entrant dans la constitution d'un tel système d'aide à la régénération.

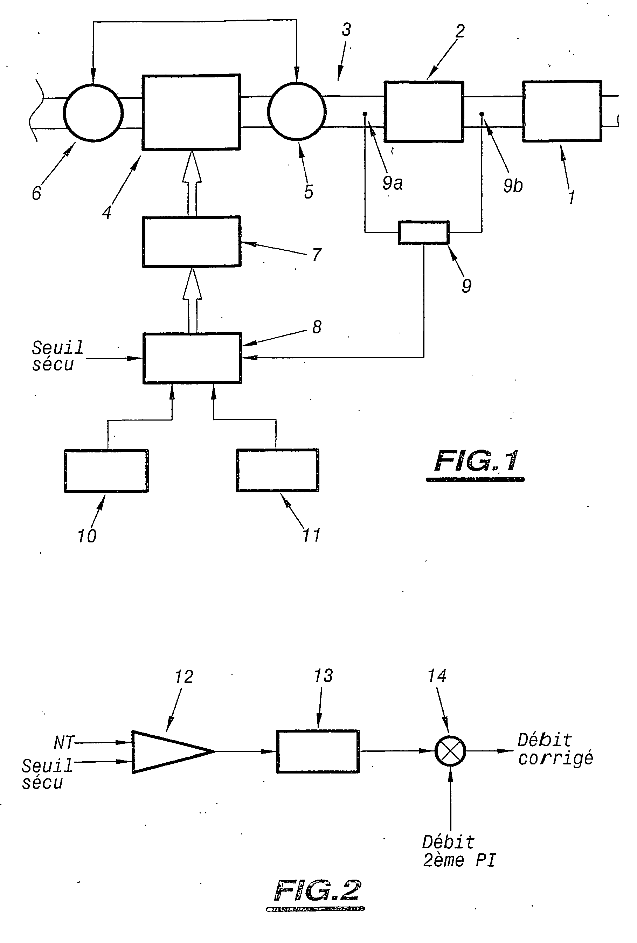

On a en effet illustré sur la figure 1, un système d'aide à la régénération de moyens de dépollution désignés par la référence générale 1, associés à des moyens formant catalyseur d'oxydation désignés par la référence générale 2, intégrés dans une ligne d'échappement désignée par la référence générale 3, d'un moteur Diesel 4 de véhicule automobile.

Les moyens formant catalyseur sont placés en amont des moyens de dépollution.

Le moteur peut être associé à un turbocompresseur dont la portion de turbine 5 est disposée dans la ligne d'échappement et dont la portion de compresseur 6 est disposée en amont du moteur.

Les moyens de dépollution peuvent par exemple comporter un filtre à particules, un piège à NOx, un catalyseur d'oxydation, un piège à SOx, etc..

On notera également que de façon classique, le carburant peut comporter un additif destiné à se déposer avec les particules auxquelles il est mélangé, sur les moyens de dépollution pour faciliter leur régénération en abaissant la température de combustion des suies piégées dans ceux-ci.

De façon classique, cet additif est en effet présent dans les particules après combustion du carburant additivé dans le moteur.

Un additif formant piège à NOx peut également être envisagé.

Le moteur est également associé à des moyens d'alimentation à rampe commune d'injection de carburant dans des cylindres du moteur, selon au moins une post-injection.

Ces moyens sont désignés par la référence générale 7 sur cette figure et sont associés à des moyens de pilotage désignés par la référence générale 8, pour mettre en oeuvre, à iso-couple, au moins deux stratégies de régénération de premier et de second niveaux, selon des paramètres de contrôle de fonctionnement du moteur différents, afin d'obtenir des niveaux thermiques différents dans la ligne d'échappement, le niveau thermique correspondant à la stratégie de second niveau étant supérieur à celui correspondant à la stratégie de premier niveau.

Ceci se fait alors en modifiant les paramètres de contrôle de fonctionnement du moteur, tels que par exemple l'air d'admission, par régulation du papillon d'admission dans le moteur, par régulation de la pression de consigne du turbocompresseur ou par régulation de la quantité de carburant injectée dans le moteur, par exemple lors des post-injections, de façon classique.

On sait en effet que la régénération de tels moyens de dépollution se fait par utilisation d'injections multiples dans les cylindres du moteur, notamment pendant leurs phases de détente.

Afin de limiter l'intensité de l'exotherme lors de la régénération, les moyens de pilotage mettent en oeuvre en permanence un contrôle de l'écart des températures aux bornes du système de catalyse ou de chaque élément du système de catalyse, cet écart étant le reflet du niveau d'exotherme, pour adapter les caractéristiques des différentes injections (débit, début d'injection, etc...), afin de réduire le niveau d'exotherme de ces moyens formant catalyse lorsqu'il est trop élevé.

En fait, ce système comporte des moyens d'acquisition du niveau d'exotherme des moyens formant catalyseur, désignés par la référence générale 9 sur cette figure, des moyens de comparaison de ce niveau d'exotherme à une valeur de seuil de sécurité de ces moyens formant catalyseur, formés par les moyens de pilotage 8, pour, en cas de dépassement de cette valeur de seuil lors de l'application de la stratégie de second niveau, désignée par la référence générale 10, piloter les moyens d'alimentation 7 afin de réguler progressivement au moins l'un des paramètres de contrôle du fonctionnement du moteur, de manière à réduire le niveau d'exotherme des moyens formant catalyseur, et si ce niveau n'est pas redescendu en-dessous de la valeur de seuil au bout d'une première période de temps prédéterminée, piloter les moyens d'alimentation pour basculer vers la stratégie de premier niveau, désignée par la référence générale 11 et si ce niveau d'exotherme des moyens formant catalyseur n'est toujours pas redescendu en-dessous de la valeur de seuil de sécurité au bout d'une seconde période de temps prédéterminée, arrêter la stratégie de régénération.

En fait, les moyens d'acquisition du niveau d'exotherme des moyens formant catalyseur peuvent comporter deux capteurs de température 9a,9b, l'un placé en amont et l'autre, en aval de ces moyens formant catalyseur.

La régulation est illustrée sur la figure 2, où l'on peut constater qu'un comparateur désigné par la référence générale 12 reçoit en entrée, la valeur de seuil de sécurité seuil-sécu. des moyens formant catalyseur et le niveau thermique NT des moyens formant catalyseur acquis comme décrit précédemment.

La sortie de ce comparateur 12 est raccordée à un régulateur de type PI à gain non linéaire désigné par la référence générale 13, adapté pour délivrer une information de correction à un correcteur 14 pour réduire progressivement le débit en carburant d'une seconde post-injection les moyens d'alimentation 7 étant adaptés pour mettre en oeuvre deux post-injections successives.

On conçoit alors que dans ce cas, les moyens d'alimentation 7 sont adaptés pour réduire le débit de la seconde post-injection en utilisant un facteur correctif compris entre 0 et 1 et déterminé à partir de l'écart entre le niveau d'exotherme des moyens formant catalyseur NT et la valeur de seuil de sécurité seuil-sécu.

Bien entendu, la valeur de seuil de sécurité peut être calibrable.

On conçoit alors que l'objectif de ce système est de limiter le niveau d'exotherme produit dans les moyens formant catalyseur 2 afin de préserver l'intégrité de ceux-ci et de limiter le phénomène de vieillissement altérant les performances de conversion de ceux-ci.

Ces pics de température excessive ne peuvent se produire que lorsque le système d'aide à la régénération fonctionne en niveau 2.

En comparant l'exotherme mesuré en instantané à un seuil, on détermine s'il y a dépassement d'un exotherme critique ou non.

Ensuite, en fonction de l'écart par rapport au seuil, on modifie la stratégie d'aide à la régénération (débit et phasage des différentes injections) pour diminuer cet exotherme tout en restant à iso-couple, par exemple en réduisant le débit de post-injection.

Dans l'exemple décrit, la stratégie de régénération utilise des injections multiples et notamment deux post-injections. La calibration peut alors être faite de telle sorte que la quantité de carburant utilisée pour la deuxième post-injection, modifie la quantité d'HC produite, mais n'a pas d'influence sur le couple moteur.

Ainsi, en réduisant le débit de la post-injection n°2, on réduit la quantité d'HC émise par le moteur et par conséquent on diminue l'exotherme catalytique engendré par ces hydrocarbures imbrûlés dans les moyens formant catalyseur.

La correction sur la quantité de carburant en post-injection est réalisée tant que l'exotherme des moyens formant catalyseur reste au-dessus du seuil de sécurité. Si malgré la réduction des quantités injectées, l'exotherme ne redescend pas en-dessous du seuil au bout d'une première période de temps, alors on force le système à basculer sur la stratégie de niveau 1, utilisée lorsque les moyens formant catalyseur ne sont pas amorcés et ne produisant quasiment pas d'HC.

Si, même après avoir basculé sur cette stratégie de niveau 1, l'exotherme reste excessif pendant une période de temps prédéterminée, alors on coupe la régénération.

Ainsi, si l'exotherme catalyseur DTcata, mesuré par la différence entre la température en aval et en amont des moyens formant catalyseur, dépasse un seul calibrable DTcata.max, alors le débit de la post-injection n°2 est progressivement réduit en le multipliant par un facteur correctif compris entre 0 et 1, Kcata, donné par un régulateur de type PI avec gain non linéaire en fonction de l'écart de température Dexot cata = DTcata - DTcata.max.

Un compteur de temps tst est alors déclenché dès que Dexot.cata>0. Au bout d'un temps calibrable tsécucata, le système d'aide à la régénération est forcé en niveau 1 pendant un temps minimum calibrable tniv1cata. Si, au bout de ce temps tniv1cata, l'exotherme n'est toujours pas redescendu en-dessous du seuil de sécurité DTcata.max, alors la régénération est stoppée.

On conçoit alors qu'un tel système permet d'assurer la sécurité de fonctionnement des moyens formant catalyseur.

Bien entendu, d'autres modes de réalisation peuvent être envisagés.

Ainsi par exemple, les moyens de dépollution et les moyens formant catalyseur d'oxydation peuvent être intégrés dans un seul et même élément, notamment sur un même substrat.

A titre d'exemple, un filtre à particules intégrant la fonction d'oxydation peut être envisagé.

De même, un piège à NOx intégrant une telle fonction d'oxydation peut également être envisagé, que celui-ci soit additivé ou non.

Cette fonction d'oxydation et/ou de piège à NOx peut être remplie par exemple par un additif mélangé au carburant.

Enfin, les moyens de dépollution peuvent également comporter un catalyseur d'oxydation ou un piège à SOx.

## Revendications

1. Système d'aide à la régénération de moyens de dépollution (1) associés à des moyens formant catalyseur d'oxydation (2), et intégrés dans une ligne d'échappement (3) d'un moteur Diesel (4) de véhicule automobile, dans lequel le moteur est associé à des moyens (7) d'alimentation à rampe commune d'injection de carburant dans des cylindres du moteur, selon au moins une post-injection, et adaptés pour mettre en oeuvre, à iso-couple, au moins deux stratégies de régénération de premier et de second niveaux (10,11), selon des paramètres de contrôle de fonctionnement du moteur différents, afin d'obtenir des niveaux thermiques différents dans la ligne d'échappement, le niveau thermique correspondant à la stratégie de second niveau (10) étant supérieur à celui correspondant à la stratégie de premier niveau (11), **caractérisé en ce qu'**il comporte des moyens (9) d'acquisition du niveau d'exotherme (NT) des moyens formant catalyseur (2), des moyens de comparaison (8) de ce niveau d'exotherme à une valeur de seuil de sécurité (seuil-secu) des moyens formant catalyseur (2), pour, en cas de dépassement de cette valeur de seuil, lors de l'application de la stratégie de second niveau (10), piloter les moyens d'alimentation (7) de réguler progressivement au moins l'un des paramètres de contrôle du fonctionnement du moteur, de manière à réduire le niveau d'exotherme des moyens formant catalyseur (2) et si ce niveau n'est pas redescendu en-dessous de la valeur de seuil au bout d'une première période de temps prédéterminée, piloter les moyens d'alimentation (7) pour basculer vers la stratégie de premier niveau (11) et si ce niveau d'exotherme des moyens formant catalyseur n'est toujours pas redescendu en-dessous de la valeur de seuil de sécurité au bout d'une seconde période de temps, arrêter la stratégie de régénération,
**en ce que** les moyens d'alimentation (7) sont adaptés pour mettre en oeuvre deux post-injections successives,
**en ce que** lors de ladite régulation progressive d'au moins l'un des paramètres de contrôle du fonctionnement du moteur, les moyens d'alimentation (7) réduisent progressivement le débit en carburant de la seconde post-injection en utilisant un facteur correctif compris entre 0 et 1 et déterminé à partir de l'écart entre le niveau d'exotherme (NT) et la valeur de seuil de sécurité (seuil-secu).

2. Système selon la revendication 1, **caractérisé en ce que** le facteur correctif est déterminé par un régulateur de type PI à gain non linéaire(13).

3. Système selon l'une quelconque des revendications précédentes, **caractérisé en ce que** les moyens (9) d'acquisition du niveau d'exotherme comprennent deux capteurs de température (9a,9b), l'un placé en amont et l'autre en aval des moyens formant catalyseur (2).

4. Système selon l'une quelconque des revendications précédentes, **caractérisé en ce que** le moteur (4) est un moteur Diesel associé à un turbocompresseur (5,6).

5. Système selon l'une quelconque des revendications précédentes, **caractérisé en ce que** la valeur de seuil de sécurité (seuil-secu) est calibrable.

6. Système selon l'une quelconque des revendications précédentes, **caractérisé en ce que** les moyens de dépollution (1) comprennent un filtre à particules.

7. Système selon l'une quelconque des revendications précédentes, **caractérisé en ce que** les moyens de dépollution (1) comprennent un piège à NOx.

8. Système selon l'une quelconque des revendications précédentes, **caractérisé en ce que** les moyens de dépollution (1) comprennent un piège à SOx.

9. Système selon l'une quelconque des revendications précédentes, **caractérisé en ce que** les moyens de dépollution (1) comprennent un catalyseur d'oxydation.

10. Système selon l'une quelconque des revendications précédentes, **caractérisé en ce que** le carburant comporte un additif destiné à se déposer avec les particules auxquelles il est mélangé, sur les moyens de dépollution (1) pour faciliter leur régénération.

11. Système selon l'une quelconque des revendications 1 à 9, **caractérisé en ce que** le carburant comporte un additif formant piège à NOx.

## Claims

1. System for assisting with the regeneration of anti-pollution means (1) associated with means forming an oxidation catalyst (2), and integrated in an exhaust line (3) from a diesel engine (4) of a motor vehicle, wherein the motor is associated with common rail fuel injection supply means (7) to the cylinders of the engine, in at least one post-injection, and adapted to implement, at iso-torque, at least two first-and second-level regeneration strategies (10, 11), according to different engine function control parameters, in order to obtain different thermal levels in the exhaust line, the thermal level corresponding to the second-level strategy (10) being higher than that corresponding to the first-level strategy (11), **characterised in that** it comprises means (9) for acquiring the exothermic level (NT) of the catalyst-forming means (2), means (8) for comparing this exothermic level with a safety threshold value (safe-threshold) of the catalyst forming means (2), for the purpose of controlling the supply means (7), in the event of this threshold value being exceeded in the course of the application of the second-level strategy, so as to progressively regulate at least one of the engine function control parameters, in such a way as to reduce the exothermic level of the catalyst-forming means (2), and if this level has not dropped below the threshold value after a first predetermined length of time, controlling the supply means (7) so as to switch to the first-level strategy (11), and if this exothermic level of the catalyst-forming means still has not fallen below the safety threshold value after a second period of time, stopping the regeneration strategy,
**in that** the supply means (7) are adapted to implement two successive post-injections,
**in that** during said progressive regulation of at least one of the engine function control parameters, the supply means (7) progressively reduce the flow rate of fuel of the second post-injection using a correcting factor between 0 and 1 and determined from the difference between the exothermic level (NT) and the safety threshold value (safe-threshold).

2. System according to claim 1, **characterised in that** the correcting factor is determined by a PI-type regulator with a non-linear gain (13).

3. System according to one of the preceding claims, **characterised in that** the means (9) for acquiring the exothermic level comprise two temperature sensors (9a, 9b), one placed upstream and one placed downstream of the catalyst-forming means (2).

4. System according to any one of the preceding claims, **characterised in that** the engine (4) is a diesel engine associated with a turbocompressor (5, 6).

5. System according to any one of the preceding claims, **characterised in that** the value of the safety threshold (safe-threshold) can be calibrated.

6. System according to any one of the preceding claims, **characterised in that** the anti-pollution means (1) comprise a particle filter.

7. System according to any one of the preceding claims, **characterised in that** the anti-pollution means (1) comprise an NOx trap.

8. System according to any one of the preceding claims, **characterised in that** the anti-pollution means (1) comprise an SOx trap.

9. System according to any one of the preceding claims, **characterised in that** the anti-pollution means (1) comprise an oxidation catalyst.

10. System according to any one of the preceding claims, **characterised in that** the fuel contains an additive adapted to be deposited with the particles with which it is mixed, on the anti-pollution means (1), to assist with their regeneration.

11. System according to any one of claims 1 to 9, **characterised in that** the fuel contains an additive forming an NOx trap.

## Patentansprüche

1. System zur Unterstützung der Regeneration von Entgiftungsmitteln (1) die mit einem Oxydationskatalysator (2) verbunden und in eine Auspufflinie (3) eines Dieselmotors (4) eines Kraftfahrzeugs integriert sind, bei dem der Motor mit Mitteln (7) verbunden ist zur common-rail Einspritzung von Brennstoff in den Zylinder des Motors, mit wenigstens einer Nach-Einspritzung, und der Motor dazu eingerichtet ist, bei konstantem Drehmoment mindestens zwei Regenerationsstrateglen eines ersten und eines zweiten Niveaus (10. 11) auszuführen, gemäß unterschiedlichen Betriebssteuerparametern des Motors, um unterschiedliche Temperaturniveaus in der Auspuffleitung zu erhalten, wobei das Temperaturniveau, das der Strategie des zweiten Niveaus (10) entspricht, höher ist als dasjenige, das der Strategie des ersten Niveaus (11) entspricht, **dadurch gekennzeichnet, daß** es Mittel zur Aufnahme des exothermen Niveaus (MT) des Katalysators (2) und Mittel zum Vergleich dieses exothermen Niveaus mit einem Sicherheitsschwellenwert (seuil-secu) des Katalysators (2) aufweist, um im Fall der Überschreitung dieses Schwellenwertes bei Anwendung der Strategie des zweiten Niveaus (10) die Einspritzmittel (7) so anzusteuern, daß wenigstens einer der Betriebssteuerparameter des Motors progressiv eingestellt wird, derart, daß das exotherme Niveau des Katalysators (29 verringert wird, und, wenn dieses Niveau am Ende einer vorbestimmten ersten Zeitspanne nicht wieder unter den Schwellenwert abgesunken ist, die Einspritzmittel (7) so anzusteuern, daß auf die Strategie des ersten Niveaus (11) gewechselt wird, und, wenn dieses exotherme Niveau des Katalysators am Ende einer zweiten Zeitspanne immer noch nicht wieder unter den Schwellenwert abgesunken ist, die Regenerationsstrategie zu beenden,
daß die Einspritzmittel (7) dazu eingerichtet sind, zwei aufeinanderfolgende Nach-Einspritzungen auszuführen,
daß bei der genannten progressiven Einstellung wenigstens eines der Betriebssteuerparameter des Motors die Einspritzmittel (7) den Kraftstoffdurchsatz für die zweite Nach-Einspritzung progressiv reduzieren, unter Verwendung eines Korrekturfaktors zwischen 0 und 1 und bestimmt in Abhängigkeit von dem Abstand zwischen dem exothermen Niveau (NT) und dem Sicherheitsschwellenwert (seuil-secu).

2. System nach Anspruch 1, **dadurch gekenntzeichnet,** daß der Korrekturfaktor durch einen PI-Regler (13) mit nichtlinearem Gewinn bestimmt ist.

3. System nach einem der vorstehenden Ansprüche, **dadurch gekennzeichnet, daß** die Mittel (9) zur Aufnahme des exothermen Niveaus zwei Temperaturfühler (9a. 12b) aufweisen, von denen einer stromaufwärts und der andere stromabwärts des Katalysators (2) angeordnet ist.

4. System nach einem der vorstehenden Ansprüche, **dadurch gekennzeichnet, daß** der Motor (4) ein Dieselmotor mit Turbokompressor (5. 6) ist.

5. System nach einem der vorstehenden Ansprüche, **dadurch gekennzeichnet, daß** der Sicherheitsschwellenwert (seuil-secu) kalibrierbar ist.

6. System nach einem der vorstehenden Ansprüche, **dadurch gekennzeichnet, daß** die Entgiftungsmittel (1) einen Partikelfilter aufweisen.

7. System nach einem der vorstehenden Ansprüche, **dadurch gekennzeichnet, daß** die Entgiftungsmittel (1) eine Stickoxidfalle aufweisen.

8. System nach einem der vorstehenden Ansprüche, **dadurch gekennzeichnet, daß** die Entgiftungsmittel (1) eine SOx-Falle aufweisen.

9. System nach einem der vorstehenden Ansprüche, **dadurch gekennzeichnet, daß** die Entgiftungsmittel (1) einen Oxidationskatalysator aufweisen.

10. System nach einem der vorstehenden Ansprüche, **dadurch gekennzeichnet, daß** der Kraftstoff ein Additiv enthält, das dazu bestimmt ist, sich zusammen mit den Partikeln, mit denen es vermischt ist, auf den Entgiftungsmitteln (1) niederzuschlagen, um deren Regeneration zu erleichtern.

11. System nach einem der Ansprüche 1 bis 9. **dadurch gekennzeichnet, daß** der Brennstoff ein Additiv enthält, das eine Stickoxidfalle bildet.
